# FASCICULE DE BREVET EUROPEEN

(11) **EP 1 864 007 B1**
(45) Date de publication et mention de la délivrance du brevet: **29.07.2009**
(21) Numéro de dépôt: 06726131.3
(22) Date de dépôt: 20.03.2006
(51) Int. Cl.: F01N 11/00, F01N 3/023

(54) **PROCEDE ET DISPOSITIF DE SURVEILLANCE D UN FILTRE A PARTICULES EQUIPANT LA LIGNE D ECHAPPEMENT D UN MOTEUR A COMBUSTION INTERNE**
VERFAHREN UND VORRICHTUNG ZUR ÜBERWACHUNG EINES TEILCHENFILTERS IN DER ABGASLEITUNG EINES VERBRENNUNGSMOTORS
METHOD AND DEVICE FOR MONITORING A PARTICLE FILTER IN THE EXHAUST LINE OF AN INTERNAL COMBUSTION ENGINE

(30) Priorité: 18.03.2005 FR 0550709
(43) Date de publication de la demande: 12.12.2007
(73) Titulaire: Renault SAS, 92100 Boulogne Billancourt (FR)
(72) Inventeur: THOUVENEL, Nicolas, F-91610 Ballancourt sur Essone (FR); LEPRIEUR, Laurent, F-91470 Limours (FR)
(86) Numéro de dépôt international: PCT/FR2006/000633
(87) Numéro de publication internationale: WO 2006/097646

(56) Documents cités:
- DE-A1- 10 228 659
- US-A- 5 444 974
- US-A1- 2004 123 586

## Description

La présente invention se rapporte au domaine des dispositifs de dépollution placés dans la ligne d'échappement des moteurs à combustion interne de véhicules automobiles, et concerne plus particulièrement un procédé et un dispositif de diagnostic embarqué pour la surveillance d'un filtre à particules placé dans la canalisation d'échappement d'un tel moteur à combustion interne.

La présence d'un filtre à particules dans une ligne d'échappement d'un moteur d'un moteur à combustion interne, en particulier d'un moteur diesel permet de diminuer considérablement la quantité de particules, poussières et autres suies émises dans l'atmosphère afin notamment de répondre aux exigences réglementaires telles que les normes antipollution.

De tels filtres à particules peuvent subir des dégradations plus ou moins importantes, ce qui peut diminuer leurs performances. Ainsi des dispositifs et des procédés ont été développés pour surveiller avec précision les performances de tels filtres et ainsi permettre de contrôler s'ils sont endommagés ou dans un état fonctionnel.

De l'état de la technique tels que le document EP1425498 ou encore le document FR2836957, sont proposés des dispositifs et des procédés permettant de diagnostiquer le mode de fonctionnement du filtre à particules. Cela consiste souvent à utiliser une information relative à la pression différentielle mesurée aux bornes d'un filtre à particules ou par exemple en la mesure de différentes grandeurs caractéristiques en amont et en aval dudit filtre à particules. Ce sont par exemple la variation de la température d'une surface connue en fonction de la quantité de particules accumulée et de la capacité calorifique des particules piégées, ou la variation de la capacité électrique des gaz d'échappement en fonction de la quantité de particules présente.

Toutefois, de tels procédés nécessitent l'implantation de capteurs souvent coûteux. De plus, la surveillance, par l'intermédiaire de la mesure de la pression, de le mode de fonctionnement d'une nouvelle génération de filtre à particules poreux, catalytiques ou non, devient de plus en plus difficile. En effet, la présence de tels filtres à poussières dans la ligne d'échappement n'induit que peu de variation de pression ne permettant pas ainsi de surveiller correctement l'état du filtre à particules, le diagnostic étant moins fiable.

Du document DE 10228659, il est proposé un procédé de surveillance d'un système d'évacuation des gaz d'échappement d'un véhicule automobile. Des courbes de températures sont mesurées en amont et en aval d'une partie de la conduite des gaz d'échappement. La comparaison et le traitement de ces mesures essayent d'effectuer un diagnostic du fonctionnement d'un filtre à particules. Ce document précise que les courbes mesurées correspondent à des mesures effectuées lorsque le moteur passe d'un état de charge haute à un état de charge basse et inversement. Un problème de cette proposition est qu'elle utilise deux capteurs pour faire l'analyse, et les capteurs disposés dans une ligne d'échappement ont un coût par pièce élevé.

Le but de l'invention est de proposer un dispositif et un procédé de diagnostic amélioré, embarqué pour la surveillance d'un filtre à particules dans la canalisation d'un tel moteur à combustion interne.

Dans ce but, l'invention a pour objet un procédé de surveillance du mode de fonctionnement d'un élément de post-traitement des gaz d'échappement d'un moteur à combustion interne comportant les étapes suivantes :
a) mesurer une grandeur caractéristique des gaz d'échappement en aval dudit élément de post-traitement des gaz d'échappement ;
b) déterminer les décélérations du moteur et incrémenter un compteur de décélération lors de chaque décélération;
c) incrémenter un compteur de défaillance lorsqu'une variation de ladite grandeur mesurée dans l'étape (a) est détectée pendant une décélération ;
d) établir un critère de diagnostic fonction des deux compteurs; et
e) déclencher un signal de défaut si le critère de diagnostic dépasse des limites préprogrammées

Un des avantages de la présente invention est qu'on n'utilise qu'un seul capteur dans la ligne d'échappement, le deuxième capteur de vitesse étant un capteur déjà présent pour le contrôle moteur.

Selon d'autres caractéristiques de l'invention :
- on établit le critère de diagnostic sous forme d'une moyenne glissante obtenue sur un nombre de décélérations.
- on calcule la moyenne glissante tout au long du roulage sur une répétition d'un nombre de décélérations.
- on établit le critère de diagnostic en divisant la valeur instantanée du compteur de défaillance par la valeur instantanée du compteur de décélération.
- on compare le critère de diagnostic moyen avec les limites préprogrammées sous forme d'un critère de seuil, par exemple un critère de seuil déterminé avec une approche statistique basée sur le respect d'un taux de fausse détection et d'un taux de non détection.
- on mesure ladite grandeur en utilisant un seul capteur de température disposé en aval dudit élément de post-traitement des gaz d'échappement.
- on incrémente le compteur de défaillance lorsqu'on détecte une diminution de la température des gaz d'échappement.

L'invention a également pour objet un dispositif de surveillance du mode de fonctionnement d'un élément de post-traitement des gaz d'échappement d'un moteur à combustion interne, comportant un contrôleur apte à recevoir un signal représentant une grandeur caractéristique des gaz d'échappement en aval dudit élément de post-traitement des gaz d'échappement, **caractérisé en ce que** ledit contrôleur est apte à recevoir un signal représentant les décélérations du moteur et est adapté à incrémenter un compteur de décélération lors de chaque décélération, comportant en plus un compteur de défaillance incrémenté lorsqu'une variation de ladite grandeur mesurée est détectée pendant une décélération et ce que ledit contrôleur établit un critère de diagnostic fonction des deux compteurs et déclenche un signal de défaut si le critère de diagnostic dépasse des limites préprogrammées.

Selon d'autres caractéristiques de l'invention :
- ledit élément de traitement est un filtre à particules.
- ladite grandeur mesurée représente la température des gaz d'échappement en aval dudit élément de post-traitement des gaz d'échappement.

L'invention sera mieux comprise par la description ci-après d'un mode de réalisation donné à titre d'exemple non limitatif en référence aux dessins annexés, dans lequel :
- la figure 1 représente différents profils thermiques mesurés en un point de la ligne d'échappement situé en aval d'un filtre à particules lorsque le filtre à particules est présent et fonctionne normalement, et lorsqu'il est absent ou fortement endommagé
- la figure 2 présente un détail de l'évolution des grandeurs présentées sur la figure 1
- la figure 3 représente un organigramme illustrant le fonctionnement du procédé selon l'invention
- la figure 4 représente l'allure de répartition des moyennes glissantes en fonction d'un critère de diagnostic

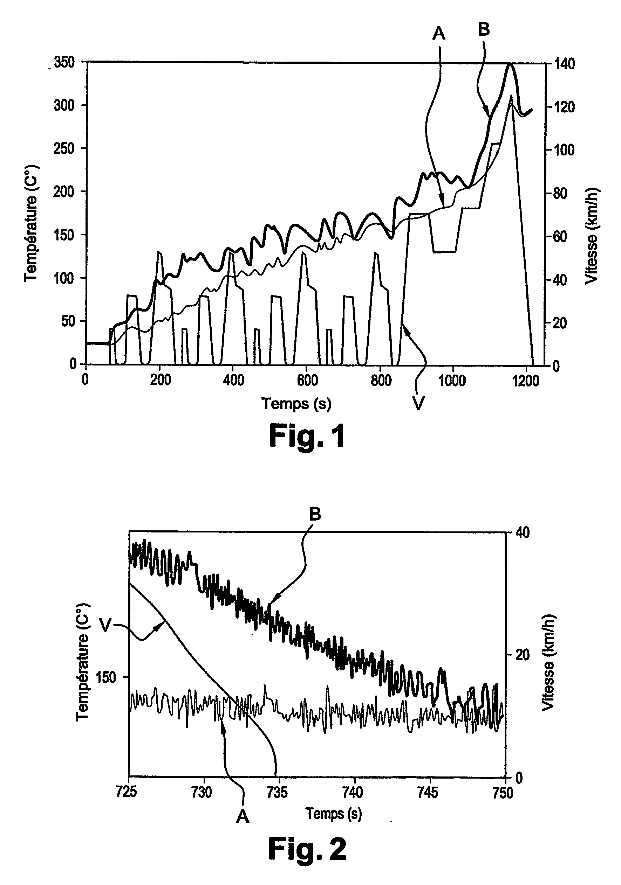

Sur la figure 1, des courbes A et B présentent les variations de la température mesurée en aval d'un filtre à particules, en carbure de silicium par exemple, en un point de la ligne d'échappement d'un moteur à combustion en fonction du temps. Les courbes A et B sont établies lors d'un cycle normalisé de fonctionnement du moteur à combustion interne, destiné à évaluer le comportement polluant dudit moteur lors de plusieurs cycles d'accélération et de décélération.

La courbe A est par exemple mesurée sur un véhicule ayant un filtre à particules neuf, tandis que la courbe B est mesurée sur un véhicule ayant un filtre à particules remplacé par un simple tube, simulant ainsi l'absence du filtre à particules ou un filtre à particules fortement endommagé, percé par exemple. La courbe V représente la vitesse du véhicule lors de ce cycle.

Les profils thermiques relevés sont sensiblement différents selon que le filtre à particules est présent et fonctionnel ou selon que le filtre à particules est absent ou fortement endommagé. En agrandissant une partie de la figure 1 lors d'une décélération du moteur, le profil thermique restitué sur un cycle de dépollution par un véhicule sans filtre à particules ou avec un filtre à particule endommagé, présente une pente sensiblement supérieure, en valeur absolue, à celle du profil thermique enregistré lorsque le filtre à particules fonctionne correctement.

La pente de la courbe de température observée pour un filtre à particules fonctionnant correctement est sensiblement faible, voire sensiblement nulle. En effet, sur une décélération du moteur, un filtre à particules, dont le fonctionnement est correct, ne restitue pas ou restitue très peu la chaleur emmagasinée sur une décélération, alors qu'un simple tube ou un filtre à particules fortement endommagé n'a aucune incidence sur l'évacuation des bouffées thermiques. Lors d'une décélération, la température en aval, et en amont du filtre à particules, diminue. Ainsi la dérivée d'un signal thermique mesuré en un point de la ligne d'échappement situé en aval d'un filtre à particules peut constituer un indicateur pouvant renseigner sur le mode de fonctionnement du filtre à particules.

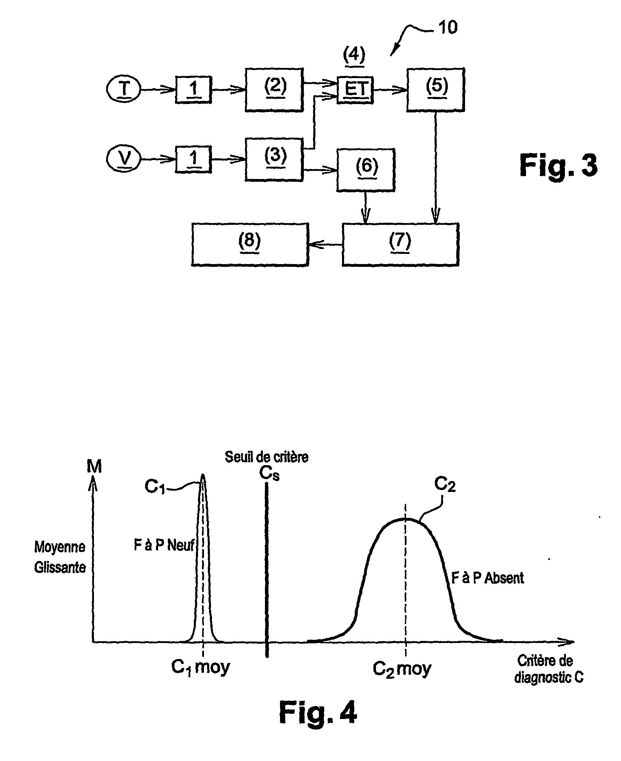

Sur la figure 3 est représenté un contrôleur 10 de surveillance du mode de fonctionnement d'un élément de post-traitement des gaz d'échappement, tel qu'un filtre à particules, qui comporte des moyens de filtrages 1, un module de détection d'une perte thermique 2 permettant de détecter une chute de la température mesurée en aval du filtre à particules, un module 3 de détection d'une décélération permettant de détecter une diminution de la vitesse du véhicule, un opérateur logique 4 de type AND permettant que les deux conditions de chute thermique et de décélération des modules de détection 2, 3 soient réunies.

Le contrôleur 10 de surveillance du filtre à particules comporte également un compteur de défaillance 5, un compteur de décélérations 6.

Un critère de diagnostic C est défini comme étant le rapport entre la valeur du compteur de défaillance 5 et la valeur du compteur de décélérations 6. De préférence, les valeurs des compteurs sont des valeurs instantanées.

Le contrôleur 10 de surveillance du filtre à particules comporte également un module 7 de calcul du critère de diagnostic C permettant de calculer le critère le critère de diagnostic.

Une moyenne glissante M des valeurs dudit critère de diagnostic C est alors établie sur un nombre préalablement déterminé de décélérations par un module 8 de calcul de moyenne. De cette façon, on établit un critère de diagnostic sous forme d'une moyenne glissante M obtenue sur un nombre de décélération en accord avec des bases statistiques.

Cette moyenne glissante M est calculée tout au long du roulage sur une répétition d'un nombre défini de décélérations.

Le procédé de surveillance du filtre à particules selon l'invention est établi à partir de la mesure d'une grandeur caractéristique, telle que la température en aval du filtre à particules, et à partir de la mesure de la vitesse du véhicule.

La première étape du procédé consiste donc à mesurer à chaque instant t par l'intermédiaire de simples capteurs, la température en aval du filtre à particules disposé en un point de la ligne d'échappement et la vitesse du véhicule. Les signaux générés respectivement de la température et de la vitesse, sont ensuite filtrés.

Une fois ces signaux filtrés par des moyens de filtrage 1, une étape consiste alors à détecter les chutes de température lorsque le véhicule décélère.

A cet effet, lorsqu'une décélération du véhicule est détectée par l'intermédiaire d'un module de détection de décélération 3, un premier compteur décélération 6 s'incrémente.

La détection d'une décélération est réalisée par l'intermédiaire d'un module de détection de décélération 3. Ce module de détection de décélération 3 reçoit en entrée le signal filtré de la vitesse V du véhicule mesurée. Ce module de détection de décélération 3, tel qu'un comparateur par exemple, permet de comparer l'amplitude du signal de la vitesse |*Vₜ*| mesurée à un instant t avec l'amplitude de la vitesse mesurée et enregistrée dans une mémoire par exemple au temps précédent |*V*_{*t*-1}|. Le module de détection 3 délivre en sortie un signal de détection de décélération par exemple d'amplitude sensiblement égale à 1 ou 0 si une décélération est détectée ou non.

Le signal de sortie du module de détection de décélération 3 permet alors de déclencher le fonctionnement du compteur de décélération 6 qui s'incrémente donc lors d'une décélération du véhicule, c'est-à-dire lorsque la vitesse au temps t est sensiblement inférieure à la vitesse mesurée au temps t-1.

De même, la détection d'une diminution de la température est réalisée par l'intermédiaire d'un module de détection d'une perte thermique 2. Le module de détection d'une perte thermique 2 reçoit en entrée le signal filtré de la température mesurée en aval du filtre à particules. Le module de détection 2 d'une perte thermique, tel qu'un comparateur par exemple, permet de comparer l'amplitude du signal de la température mesurée à un instant t |*Tₜ*| avec l'amplitude de la température mesurée et enregistrée dans une mémoire par exemple au temps précédent |*T*_{*t*-1}|, et délivre en sortie un signal de détection d'une perte thermique par exemple d'amplitude sensiblement égale à 1 ou 0 si une diminution de la température a été détectée ou non.

Parallèlement à l'étape d'incrémentation du premier compteur décélération 6, lorsqu'une diminution de la température mesurée en aval est détectée par l'intermédiaire d'un module de détection d'une chute thermique 2, et lorsqu'une décélération est détectée, un deuxième compteur de défaillance 5 est également incrémenté. Pour cela, un opérateur logique 4, tel qu'un opérateur logique AND, recevant en entrée le signal de détection de décélération et le signal de détection d'une perte thermique délivre en sortie un signal d'amplitude sensiblement égal à 1 lorsque les deux conditions de détection sont réunies, c'est-à-dire lorsque par exemple l'amplitude du signal de détection de décélération et l'amplitude du signal de détection d'une perte thermique sont sensiblement égales à 1.

Une fois ces étapes effectuées, un module 7 de calcul de critère de diagnostic C, tel qu'un diviseur par exemple, reçoit en entrée le signal de sortie du compteur de décélération 6 et le signal de sortie du compteur de défaillance 5. Les amplitudes de ces signaux de sortie représentent respectivement le nombre de décélérations et le nombre de fois qu'il y a eu une variation de la grandeur caractéristique des gaz mesurée. Dans ce cas et de préférence, la variation à détecter est une chute thermique au cours d'une décélération. Le module 7 de calcul de critère de diagnostic C génère donc en sortie le signal dont l'amplitude représente le rapport entre l'amplitude du signal représentant le nombre de décélérations et l'amplitude du signal représentant le nombre de fois qu'il y a eu une chute thermique au cours d'une décélération. On pourrait considérer d'autres grandeurs caractéristiques des gaz d'échappement telle que la pression.

Lorsque le critère de diagnostic C est établi, une étape suivante consiste à déterminer une moyenne glissante M du critère de diagnostic C. A partir du signal de sortie du module 7 de calcul du critère de diagnostic C, un module 8 de calcul de moyenne délivre en sortie un signal dont l'amplitude représente la moyenne glissante M des amplitudes du signal du critère de diagnostic C sur un nombre préalablement déterminé de décélérations.

Sur la figure 4 sont représentées l'allure générale et la dispersion des valeurs de ladite moyenne glissante en fonction dudit critère de mesure C pour des cas extrêmes de l'état d'un filtre à particules. La courbe C1 représente par exemple la moyenne glissante du critère de diagnostic C en fonction dudit critère du diagnostic C pour un filtre à particules neuf. La courbe C2 représente la moyenne glissante du critère du diagnostic C lorsqu'il n'y a pas de filtre à particules. Les courbes C1 et C2 permettent d'étalonner le dispositif de surveillance.

Les valeurs de la moyenne glissante M de la courbe C1 s'organisent autour d'un valeur moyenne C1moy du critère de diagnostic C avec une faible dispersion autour de ladite valeur moyenne C1 moy.

Lorsque le filtre à particules est absent, les valeurs de la moyenne glissante M s'organisent autour d'une valeur moyenne C2moy du critère de diagnostic C, sensiblement supérieure de la valeur moyenne C1moy. De plus, la dispersion des valeurs de la moyenne glissante M autour de la valeur moyenne C2moy est beaucoup plus forte que lorsque le filtre à particules est neuf dans la ligne d'échappement. Les courbes C1 et C2 pour un filtre à particules neuf et un filtre à particules absent, ne se chevauchent pas.

Des limites préprogrammées telles qu'un critère de seuil Cs sont alors calibré dans le contrôleur 10. Le critère de seuil Cs peut par exemple être déterminé à partir des courbes C1 et C2 obtenues pour un filtre à particules neuf et pour un filtre à particules absent avec une approche statistique basée sur le respect d'un taux de fausse détection et d'un taux de non détection.

A partir du signal dont l'amplitude représente la moyenne glissante M, une étape suivante consiste à générer le signal dont l'amplitude est sensiblement égale au critère de diagnostic moyen Cmoy. Si l'amplitude du signal de critère de diagnostic moyen Cmoy est sensiblement inférieure au critère seuil Cs, la moyenne glissante M du critère de diagnostic C s'organisant selon une courbe sensiblement analogue à la courbe C1, alors le filtre à particules est présent et fonctionnel dans la ligne d'échappement du moteur à combustion interne.

Par contre un filtre à particules endommagé dans la ligne d'échappement du moteur à combustion interne présente une moyenne glissante M d'un critère de diagnostic C s'organisant selon une courbe sensiblement analogue à la courbe C2, autour d'un critère de mesure moyen Cmoy, sensiblement supérieur au critère seuil Cs. Le dépassement du critère seuil Cs déclenche alors un signal de défaut visible par le conducteur du véhicule, lui enjoignant d'entreprendre une opération de maintenance de son véhicule.

Dans un mode de réalisation préféré de l'invention, le traitement des valeurs de température mesurées en aval du filtre à particules est assuré, mais de manière non exclusive par un calculateur approprié, tel que le calculateur de gestion et de contrôle du fonctionnement du moteur à combustion interne.

Le procédé selon l'invention permet ainsi de disposer d'un diagnostic simple et fiable de la présence d'un filtre à particules dans la ligne d'échappement du moteur à combustion interne d'un véhicule automobile. En outre, ce procédé, basé sur une simple mesure de température en aval du filtre à particules, est applicable à tout type de filtre à particules, y compris les filtres à particules fortement poreux de dernière génération. De plus le procédé, nécessitant la simple mise en place d'un unique capteur de température en aval du filtre à particules, la mise en oeuvre du dispositif et du procédé associé est alors peu coûteuse. En effet la charge de calcul correspondant au traitement des valeurs de température mesurées étant peu importante et n'alourdissant que peu la charge de calcul d'un dispositif de gestion et de contrôle du fonctionnement du moteur à combustion interne.

## Revendications

1. Procédé de surveillance du mode de fonctionnement d'un élément de post-traitement des gaz d'échappement d'un moteur à combustion interne comportant les étapes suivantes :
a) mesurer une grandeur caractéristique des gaz d'échappement en aval dudit élément de post-traitement des gaz d'échappement ;
b) déterminer les décélérations du moteur et incrémenter un compteur de décélération (6) lors de chaque décélération;
c) incrémenter un compteur de défaillance (5) lorsqu'une variation de ladite grandeur mesurée dans l'étape (a) est détectée pendant une décélération ;
d) établir un critère de diagnostic (C) fonction des deux compteurs (5, 6) ; et
e) déclencher un signal de défaut si le critère de diagnostic (C) dépasse des limites préprogrammées (Cs).

2. Procédé de surveillance selon la revendication 1, **caractérisé en ce qu'**on établit le critère de diagnostic (C) sous forme d'une moyenne glissante (M) obtenue sur un nombre de décélérations.

3. Procédé de surveillance selon la revendication 2, **caractérisé en ce qu'**on calcule la moyenne glissante (M) tout au long du roulage sur une répétition d'un nombre de décélérations.

4. Procédé de surveillance selon l'une quelconque des revendications précédentes, **caractérisé en ce qu'**on établit le critère de diagnostic (C) en divisant la valeur du compteur de défaillance (5) par la valeur du compteur de décélération (6).

5. Procédé de surveillance selon l'une quelconque des revendications précédentes, **caractérisé en ce qu'**on compare le critère de diagnostic moyen (Cmoy) avec les limites préprogrammées sous forme d'un critère de seuil (Cs), par exemple un critère de seuil (Cs) déterminé avec une approche statistique basée sur le respect d'un taux de fausse détection et d'un taux de non détection.

6. Procédé de surveillance selon l'une quelconque des revendications précédentes, **caractérisé en ce qu'**on mesure ladite grandeur en utilisant un seul capteur de température disposé en aval dudit élément de post-traitement des gaz d'échappement.

7. Procédé de surveillance selon l'une quelconque des revendications précédentes, **caractérisé en ce qu'**on incrémente le compteur de défaillance (5) lorsqu'on détecte une diminution de la température des gaz d'échappement.

8. Dispositif de surveillance du mode de fonctionnement d'un élément de post-traitement des gaz d'échappement d'un moteur à combustion interne, comportant un contrôleur apte à recevoir un signal représentant une grandeur caractéristique des gaz d'échappement en aval dudit élément de post-traitement des gaz d'échappement, **caractérisé en ce que** ledit contrôleur (10) est apte à recevoir un signal représentant les décélérations du moteur et est adapté à incrémenter un compteur de décélération (6) lors de chaque décélération, comportant en plus un compteur de défaillance (5) incrémenté lorsqu'une variation de ladite grandeur mesurée est détectée pendant une décélération et ce que ledit contrôleur (10) établit un critère de diagnostic (C) fonction des deux compteurs (5, 6) et déclenche un signal de défaut si le critère de diagnostic (C) dépasse les limites préprogrammées (Cs).

9. Dispositif de surveillance selon la revendication précédente, **caractérisé en que** ledit élément de traitement est un filtre à particules.

10. Dispositif de surveillance selon les revendications 8 ou 9 **caractérisé en ce que** ladite grandeur mesurée représente la température des gaz d'échappement en aval dudit élément de post-traitement des gaz d'échappement.

## Claims

1. Method for monitoring the operating mode of an internal combustion engine exhaust gas post-treatment element comprising the following steps:
a) measuring a quantity characteristic of the exhaust gases downstream of the said exhaust gas post-treatment element;
b) determining the decelerations of the engine and incrementing a deceleration counter (6) during each deceleration;
c) incrementing a defect counter (5) when a variation in the said quantity measured in step (a) is detected during a deceleration;
d) establishing a diagnostic criterion (C) dependent on the two counters (5, 6); and
e) triggering a fault signal if the diagnostic criterion (C) exceeds preprogrammed limits (Cs).

2. Monitoring method according to Claim 1, **characterized in that** the diagnostic criterion (C) is established in the form of a sliding average (M) obtained over a number of decelerations.

3. Monitoring method according to Claim 2, **characterized in that** the sliding average (M) is calculated throughout a trip over a repetition of a number of decelerations.

4. Monitoring method according to any one of the preceding claims, **characterized in that** the diagnostic criterion (C) is established by dividing the value of the defect counter (5) by the value of the deceleration counter (6).

5. Monitoring method according to any one of the preceding claims, **characterized in that** the average diagnostic criterion (Cmoy) is compared with the preprogrammed limits in the form of a threshold criterion (Cs), for example a threshold criterion (Cs) determined with a statistical approach based on compliance with a false detection rate and with a nondetection rate.

6. Monitoring method according to any one of the preceding claims, **characterized in that** the said quantity is measured using a single temperature sensor disposed downstream of the said exhaust gas post-treatment element.

7. Monitoring method according to any one of the preceding claims, **characterized in that** the defect counter (5) is incremented when a decrease is detected in the temperature of the exhaust gases.

8. Device for monitoring the operating mode of an internal combustion engine exhaust gas post-treatment element, comprising a controller able to receive a signal representing a quantity characteristic of the exhaust gases downstream of the said exhaust gas post-treatment element, **characterized in that** the said controller (10) is able to receive a signal representing the decelerations of the engine and is suitable for incrementing a deceleration counter (6) during each deceleration, moreover comprising a defect counter (5) incremented when a variation in the said measured quantity is detected during a deceleration and **in that** the said controller (10) establishes a diagnostic criterion (C) dependent on the two counters (5, 6) and triggers a fault signal if the diagnostic criterion (C) exceeds the preprogrammed limits (Cs).

9. Monitoring device according to the preceding claim, **characterized in that** the said treatment element is a particulate filter.

10. Monitoring device according to Claims 8 or 9 **characterized in that** the said measured quantity represents the temperature of the exhaust gases downstream of the said exhaust gas post-treatment element.

## Patentansprüche

1. Verfahren zur Überwachung der Wirkungsweise eines Elements zur Nachbehandlung der Abgase eines Verbrennungsmotors, das die folgenden Schritte aufweist:
a) Messen einer charakteristischen Größe der Abgase hinter dem Element zur Nachbehandlung der Abgase;
b) Bestimmen der Verzögerungen des Motors und Inkrementieren eines Verzögerungszählers (6) bei jeder Verzögerung;
c) Inkrementieren eines Störungszählers (5), wenn eine Veränderung der im Schritt (a) gemessenen Größe während einer Verzögerung erfasst wird;
d) Erstellen eines Diagnosekriteriums (C) abhängig von den zwei Zählern (5, 6); und
e) Auslösen eines Fehlersignals, wenn das Diagnosekriterium (C) vorprogrammierte Grenzwerte (Cs) überschreitet.

2. Überwachungsverfahren nach Anspruch 1, **dadurch gekennzeichnet, dass** das Diagnosekriterium (C) in Form eines gleitenden Mittelwerts (M) erstellt wird, der über eine Anzahl von Verzögerungen erhalten wird.

3. Überwachungsverfahren nach Anspruch 2, **dadurch gekennzeichnet, dass** der gleitende Mittelwert (M) während des ganzen Fahrbetriebs über eine Wiederholung einer Anzahl von Verzögerungen berechnet wird.

4. Überwachungsverfahren nach einem der vorhergehenden Ansprüche, **dadurch gekennzeichnet, dass** das das Diagnosekriterium (C) erstellt wird, indem der Wert des Störungszählers (5) durch den Wert des Verzögerungszählers (6) dividiert wird.

5. Überwachungsverfahren nach einem der vorhergehenden Ansprüche, **dadurch gekennzeichnet, dass** das mittlere Diagnosekriterium (Cmoy) mit den vorprogrammierten Grenzwerten in Form eines Schwellkriteriums (Cs) verglichen wird, zum Beispiel eines Schwellkriteriums (Cs), das mit einer statistischen Annäherung basierend auf der Beachtung eines Falscherfassungsgrads und eines Nichterfassungsgrads bestimmt wird.

6. Überwachungsverfahren nach einem der vorhergehenden Ansprüche, **dadurch gekennzeichnet, dass** die Größe gemessen wird, indem ein einziger Temperaturmessfühler verwendet wird, der hinter dem Element zur Nachbehandlung der Abgase angeordnet ist.

7. Überwachungsverfahren nach einem der vorhergehenden Ansprüche, **dadurch gekennzeichnet, dass** der Störungszähler (5) inkrementiert wird, wenn eine Verringerung der Temperatur der Abgase erfasst wird.

8. Vorrichtung zur Überwachung der Wirkungsweise eines Elements zur Nachbehandlung der Abgase eines Verbrennungsmotors, die ein Steuergerät aufweist, welches ein Signal empfangen kann, das für eine charakteristische Größe der Abgase hinter dem Element zur Nachbehandlung der Abgase repräsentativ ist, **dadurch gekennzeichnet, dass** das Steuergerät (10) ein die Verzögerungen des Motors darstellendes Signal empfangen kann und geeignet ist, um einen Verzögerungszähler (6) bei jeder Verzögerung zu inkrementieren, außerdem einen Störungszähler (5) aufweist, der inkrementiert wird, wenn eine Veränderung der gemessenen Größe während einer Verzögerung erfasst wird, und dass das Steuergerät (10) ein Diagnosekriterium (C) in Abhängigkeit von den zwei Zählern (5, 6) erstellt und ein Fehlersignal auslöst, wenn das Diagnosekriterium (C) die vorprogrammierten Grenzwerte (Cs) überschreitet.

9. Überwachungsvorrichtung nach dem vorhergehenden Anspruch, **dadurch gekennzeichnet, dass** das Behandlungselement ein Partikelfilter ist.

10. Überwachungsvorrichtung nach den Ansprüchen 8 oder 9, **dadurch gekennzeichnet, dass** die gemessene Größe die Temperatur der Abgase hinter dem Element zur Nachbehandlung der Abgase darstellt.
